# EUROPEAN PATENT APPLICATION

(11) **EP 3 579 214 A1**
(43) Date of publication of application: **11.12.2019**
(21) Application number: 18748311.0
(22) Date of filing: 10.01.2018
(51) Int. Cl.: G09B 29/00, G01C 21/34, G08G 1/09, G08G 1/14, G08G 1/16

(54) **MOVEMENT ASSISTANCE SYSTEM, MOVEMENT ASSISTANCE DEVICE, MOVEMENT ASSISTANCE TERMINAL, MOVEMENT ASSISTANCE METHOD, MAP GENERATING SYSTEM, MAP GENERATING DEVICE, AND INFORMATION ACQUISITION TERMINAL**

(30) Priority: 31.01.2017 JP 2017016248
(71) Applicant: Fujitsu Limited, Kawasaki-shi, Kanagawa 211-8588 (JP)
(72) Inventor: MURASHITA, Kimitaka, Hyogo-ku Kobe-shi Hyogo 652-8510 (JP)
(74) Representative: Haseltine Lake Kempner LLP
(86) International application number: PCT/JP2018/000276
(87) International publication number: WO 2018/142852

(57) **Abstract**

Provided is a mobile assistance system capable of easily outputting map information allowing a mobile body to move autonomously even when an obstacle position changes from moment to moment. A mobile assistance system includes a mobile assistance terminal and a mobile assistance apparatus. The mobile assistance terminal includes: an image and measured distance information acquisition unit configured to acquire an image of an imaging target around a periphery of the mobile body and distance information on a distance from the mobile body to the imaging target; a position information acquisition unit configured to acquire position information on the mobile body in synchronization with the image and measured distance information acquisition unit; and a terminal-side communication unit configured to transmit to the mobile assistance apparatus the mobile body peripheral information including the image of the imaging target, the distance information on the distance from the mobile body to the imaging target, and the position information on the mobile body. The mobile assistance apparatus includes: a storage unit configured to store the past mobile body peripheral information received from the mobile assistance terminal; and a map information update unit configured to update map information indicating a travelable region where the mobile body is travelable, based on the past mobile body peripheral information stored in the storage unit and the mobile body peripheral information received from the mobile assistance terminal.

## Description

### TECHNICAL FIELD

The embodiments discussed herein are related to a mobile assistance system, a mobile assistance apparatus, a mobile assistance terminal, a mobile assistance method, a map creation system, a map creation apparatus, and an information acquisition terminal.

### BACKGROUND ART

Various proposals have been made for the purpose of guiding a vehicle to an optimal route by a car navigation system or the like. For example, there has been proposed a method of guiding a vehicle to a route by grasping a road condition that changes depending on the presence of a vehicle on curbside parking (see, for example, Patent Document 1).

In recent years, developments have advanced as to autonomous mobile bodies such as autonomous cars, autonomous robots, and the like. In order to achieve autonomous movement to a destination, an autonomous mobile body needs to follow a route while recognizing its surrounding environment, based on map information. Various proposals have also been made for the purpose of ensuring a route for an autonomous mobile body. In order to avoid an obstacle and the like on a way along which an autonomous car travels, for example, there has been proposed a method of detecting a stationary movable obstacle or the like such as a vehicle on curbside parking, using two laser distance-measuring sensors mounted to a vehicle (see, for example, Patent Document 2).

### CITATION LIST

### PATENT DOCUMENTS

Patent Document 1: Japanese Laid-open Patent Publication No. 2006-184005
Patent Document 2: Japanese Laid-open Patent Publication No. 2014-182590

### SUMMARY OF INVENTION

### TECHNICAL PROBLEM

However, when the technique disclosed in Patent Document 1 is applied to an automated driving system, a past result that a vehicle avoided a parked vehicle is registered. The technique disclosed in Patent Document 1 therefore has a problem in that a vehicle when traveling a road registered in the automated driving system next sometimes follows a route avoiding a parked vehicle irrespective of the presence or absence of a parked vehicle. As to the technique disclosed in Patent Document 2, the two laser distance-measuring sensors are expensive. The technique disclosed in Patent Document 2 therefore has a problem in that it is impractical to mount such two distance-measuring sensors to every vehicle.

Both the techniques have a problem in that it is difficult to safely and optimally operate an autonomous car since there is no map information that allows a user to grasp a state of a stationary movable obstacle or the like such as a vehicle on curbside parking in almost real time.

According to an aspect, an object is to provide a mobile assistance system capable of easily outputting map information allowing a mobile body to move autonomously even when an obstacle position changes from moment to moment.

### SOLUTION TO PROBLEM

According to an aspect of the embodiments, a mobile assistance system includes: a mobile assistance terminal to be mounted on a mobile body, the mobile assistance terminal being configured to acquire mobile body peripheral information as information on a periphery of the mobile body; and a mobile assistance apparatus configured to update map information, based on the mobile body peripheral information transmitted from the mobile assistance terminal. The mobile assistance terminal includes: an image and measured distance information acquisition unit configured to acquire an image of an imaging target around the periphery of the mobile body and distance information on a distance from the mobile body to the imaging target; a position information acquisition unit configured to acquire position information on the mobile body in synchronization with the image and measured distance information acquisition unit; and a terminal-side communication unit configured to transmit to the mobile assistance apparatus the mobile body peripheral information including the image of the imaging target, the distance information on the distance from the mobile body to the imaging target, and the position information on the mobile body. The mobile assistance apparatus includes: a storage unit configured to store the past mobile body peripheral information received from the mobile assistance terminal; and a map information update unit configured to update map information indicating a travelable region where the mobile body is travelable, based on the past mobile body peripheral information stored in the storage unit and the mobile body peripheral information received from the mobile assistance terminal.

### ADVANTAGEOUS EFFECT OF INVENTION

According to an aspect, provided is a mobile assistance system capable of easily outputting map information allowing a mobile body to move autonomously even when an obstacle position changes from moment to moment.

### BRIEF DESCRIPTION OF DRAWINGS

FIG. 1 is an explanatory view illustrating a configuration of a mobile assistance system that includes a mobile assistance apparatus and a mobile assistance terminal according to an embodiment discussed herein.
FIG. 2 is an explanatory view illustrating an exemplary map creating process.
FIG. 3 is an explanatory view illustrating an exemplary map creating process.
FIG. 4 is an explanatory view illustrating an exemplary map creating process.
FIG. 5 is an explanatory view illustrating an exemplary map creating process.
FIG. 6 is an explanatory view illustrating an exemplary map creating process.
FIG. 7 is an explanatory view illustrating an exemplary map creating process.
FIG. 8 is an explanatory view illustrating an exemplary map updating process.
FIG. 9 is an explanatory view illustrating an exemplary map updating process.
FIG. 10 is an explanatory view illustrating an exemplary map updating process.
FIG. 11 is an explanatory view illustrating an exemplary map updating process.
FIG. 12 is an explanatory view illustrating an exemplary functional configuration of the mobile assistance apparatus.
FIG. 13 is an explanatory view illustrating an exemplary hardware configuration of the mobile assistance apparatus.
FIG. 14 is an explanatory view illustrating an exemplary functional configuration of the mobile assistance terminal.
FIG. 15 is an explanatory view illustrating an exemplary hardware configuration of the mobile assistance terminal.
FIG. 16 is a sequence diagram illustrating a flow in which the mobile assistance terminal acquires mobile body peripheral information during automatic operation based on map information, and the mobile assistance apparatus updates the map information.
FIG. 17 is a flowchart illustrating an exemplary flow in which the mobile assistance terminal acquires mobile body peripheral information, and then transmits the mobile body peripheral information to the mobile assistance apparatus.
FIG. 18 is a flowchart illustrating an exemplary flow in which the mobile assistance apparatus updates map information, based on received mobile body peripheral information.
FIG. 19 is a flowchart illustrating an exemplary flow of a grid newly setting process.
FIG. 20 is a flowchart illustrating an exemplary flow of a grid updating process.

### DESCRIPTION OF EMBODIMENTS

An embodiment discussed herein will be described below; however, the following description of the embodiment discussed herein is exemplary and explanatory and is not restrictive of the invention.

A "mobile assistance system" according to an embodiment discussed herein includes a "mobile assistance apparatus" and a "mobile assistance terminal". In addition, control to be performed by each part of a control unit in the "mobile assistance apparatus" according to an embodiment discussed herein is synonymous with implementation of a "mobile assistance method" according to an embodiment discussed herein. Therefore, the details of the "mobile assistance method" according to an embodiment discussed herein will be understood from the description of the "mobile assistance apparatus" according to an embodiment discussed herein.

### [EMBODIMENTS]

### (Mobile Assistance System)

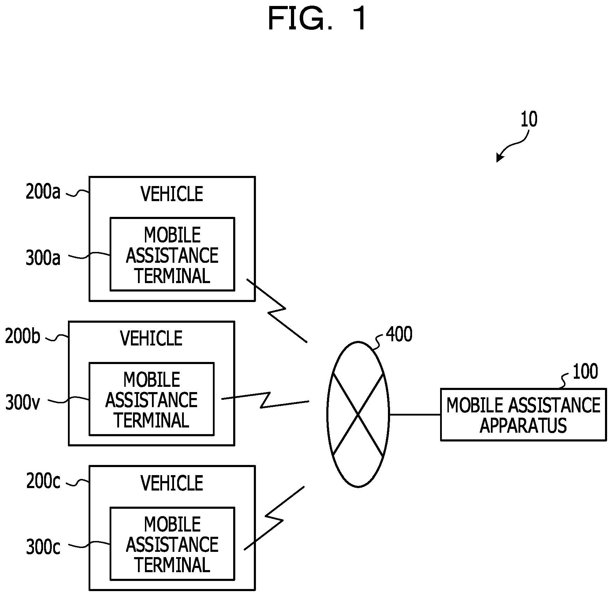

FIG. 1 is an explanatory view illustrating a configuration of a mobile assistance system 10 that includes a mobile assistance apparatus 100 and a mobile assistance terminal 300 according to an embodiment discussed herein. When the mobile assistance apparatus 100 is implemented, a mobile assistance method is implemented.

As illustrated in FIG. 1, the mobile assistance system 10 achieves the form of a so-called "connected car". For example, mobile assistance terminals 300a, 300b, and 300c are respectively mounted on vehicles 200a, 200b, and 200c as mobile bodies to acquire mobile body peripheral information as information on peripheries of the vehicles 200a, 200b, and 200c. The mobile assistance apparatus 100 collects the acquired mobile body peripheral information via a network 400, and analyzes the collected mobile body peripheral information in real time.

The mobile assistance system 10 incessantly acquires peripheral information at positions of the vehicles 200a, 200b, and 200c each equipped with a distance-measuring camera and a GPS unit, detects a temporal situation change in a movable obstacle such as a parked vehicle, and updates map information, thereby outputting a safe and optimal route. The mobile assistance system 10 therefore allows an autonomous car or the like to move autonomously.

For example, in the mobile assistance system 10, the mobile assistance terminal 300 transmits to the mobile assistance apparatus 100 mobile body peripheral information including "an image of an imaging target around a periphery of a vehicle" and "distance information on a distance from the vehicle to the imaging target" acquired by four distance-measuring cameras mounted to the vehicle 200 to capture a frontward image, rearward image, leftward image, and rightward image of the vehicle 200 as well as "position information on the vehicle" acquired by a GPS unit. The mobile assistance apparatus 100 then makes a determination as to the presence or absence, and the like of an obstacle or a parking space, based on the received latest mobile body peripheral information, and updates map information indicating regions classified into three regions, that is, a "travelable region", a "temporarily untravelable region", and an "untravelable region". The mobile assistance system 10 thus obtains map information capable of guiding the vehicle 200 to an optimal route.

The imaging target is not particularly limited as long as its image is capturable by a distance-measuring camera. Examples of the imaging target may include an obstacle on a road, a white line on a road surface, a building, a roadside tree, a wall, a column, a human, an animal, and the like.

The obstacle is not particularly limited as long as it is a structural object. Examples of the obstacle may include a parked vehicle that is parked on a road or in a parking space, a construction vehicle under operation, an emergency vehicle, and the like.

From the viewpoint of ease of detection by image processing, preferably, the parking space is a region defined by a white line.

The vehicle 200 is not particularly limited as long as the mobile assistance terminal 300 is mountable thereon, and any known vehicle may be used as appropriate. Examples of the vehicle 200 may include a commercial vehicle such as a truck, a general vehicle, and the like.

As to map information in this embodiment, a map capable of locating a position by latitude and longitude is divided into 30 cm-square grids, and regions in the grids are classified into and set at three regions, that is, a "travelable region", a "temporarily untravelable region", and an "untravelable region".

The "travelable region" in this embodiment is a region where a vehicle is permitted to travel, for example, a region inside a lane of a road, or the like.

The "temporarily untravelable region" in this embodiment is a region where a vehicle is temporarily inhibited to travel, for example, a region where a parked vehicle is present.

The "untravelable region" in this embodiment is a region where a vehicle is inhibited to travel, for example, a region where a parking space, a wall, a column, or the like is present.

The mobile assistance apparatus 100 may set the regions in the grids as "unclassified" if the mobile assistance apparatus 100 receives no mobile body peripheral information on the grids.

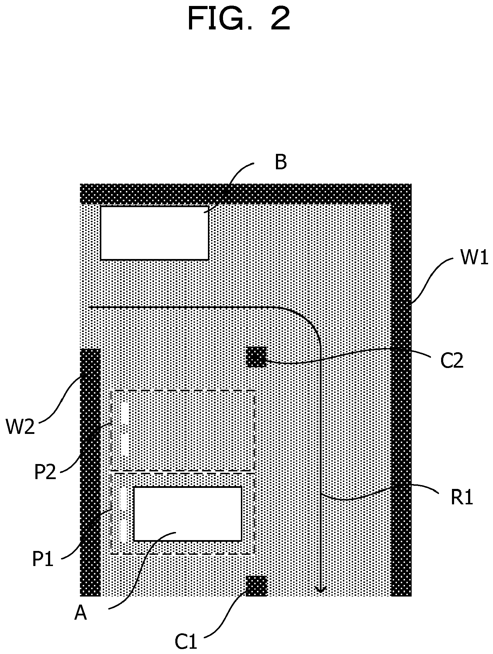

With reference to FIGS. 2 to 7, next, a description will be given of a map creating process of creating a map from mobile body peripheral information to be acquired in such a manner that the vehicle 200 equipped with the mobile assistance terminal 300 travels a passageway of an underground parking lot illustrated in FIG. 2 for the first time.

As illustrated in FIG. 2, consideration will be given to a case of creating a map of an underground parking lot in which two parking spaces P1 and P2 are present, two columns C1 and C2 are present around the parking spaces P1 and P2, a passageway is present around the parking spaces P1 and P2, walls W1 and W2 are present around the parking spaces P1 and P2 and the passageway, a vehicle A is parked in the parking space P1, and a vehicle B is temporarily stopped at the passageway.

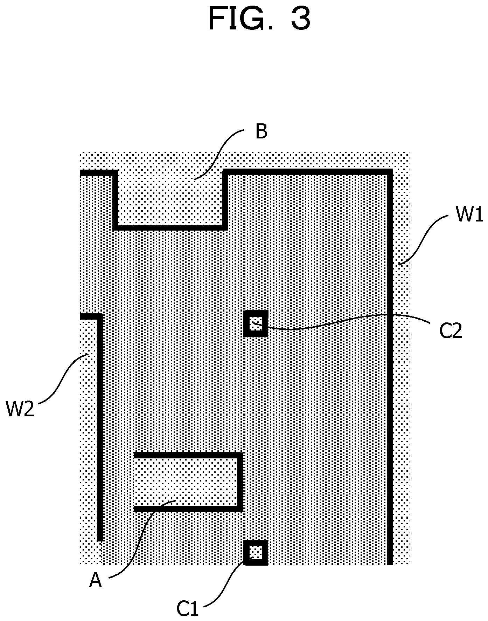

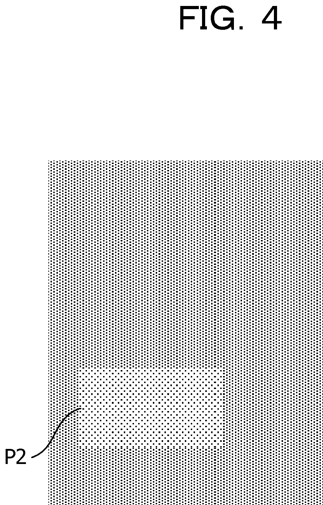

When the vehicle 200 travels as indicated by an arrow R1 in FIG. 2, imaging targets of which images are captured by the four distance-measuring cameras are detected like contours indicated by bold lines in FIG. 3. A surface of the vehicle A directed to the wall W2 and a part of the wall W2 are not detected since they are out of the image capturing ranges of the four distance-measuring cameras. In addition, performing image processing to extract the shape of a white line from the images captured by the distance-measuring cameras enables detection of the parking space P2 as illustrated in FIG. 4. The parking space P1 is not detected since the vehicle A is parked in the parking space P1 and the white line is not extracted due to the presence of the vehicle A.

Next, based on the information obtained in the description of FIGS. 2 to 4, the respective grids are classified into and set at the three regions, that is, the "travelable region", the "temporarily untravelable region", and the "untravelable region".

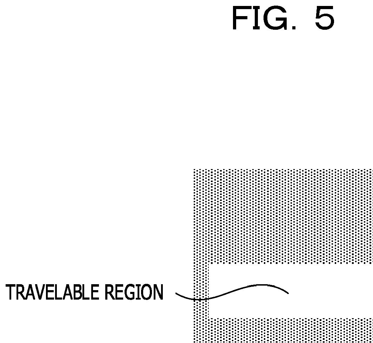

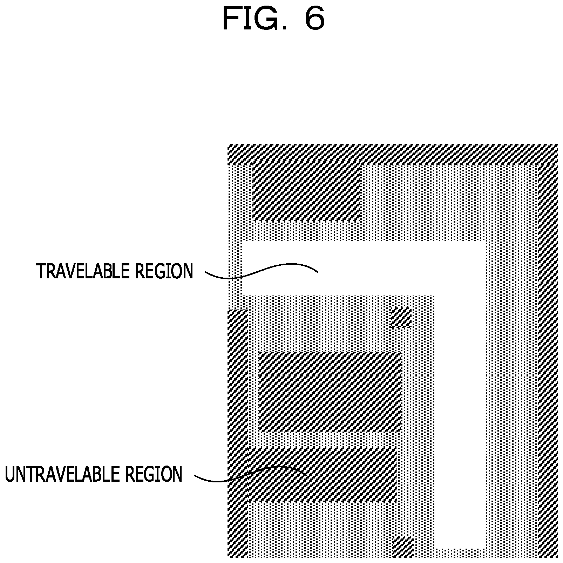

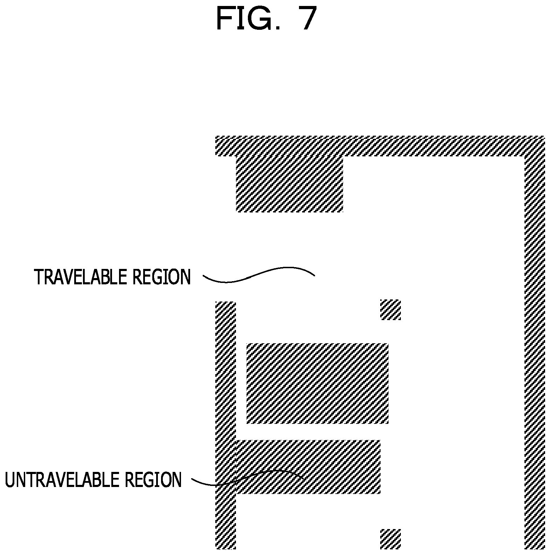

First, since the vehicle travels as indicated by the arrow R1 in FIG. 2, as illustrated in FIG. 5, a travelable region (a white region in FIG. 5) is set along the route that the vehicle 200 follows, based on the position information on the vehicle 200. Next, since the imaging targets are detected like the contours indicated by the bold lines in FIG. 3, as illustrated in FIG. 6, the corresponding grids are set at untravelable regions (hatched regions in FIG. 6), based on the detected contours. If no obstacle is detected between the travelable region and the untravelable regions, a region between the travelable region and the untravelable regions is set at a travelable region. A map illustrated in FIG. 7 is thus newly created.

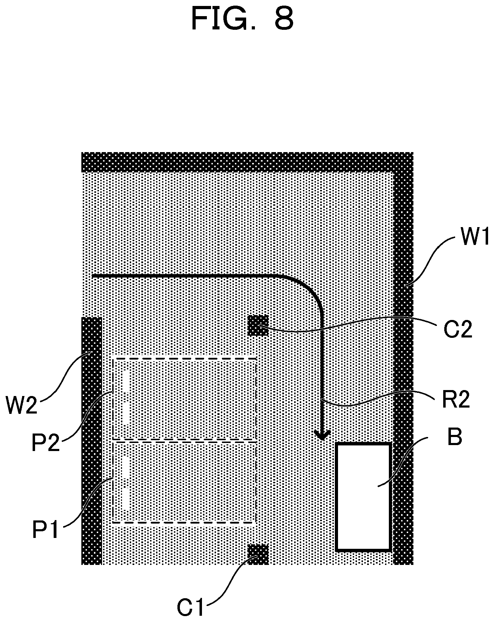

With reference to FIGS. 8 to 11, next, a description will be given of an updating process. As to the updating process, in a case where the vehicle A parked in the parking space P1 moves and the vehicle B stopped temporarily moves to a different position after the map illustrated in FIG. 7 has been created, when the vehicle 200 travels as indicated by an arrow R2 in FIG. 8, the mobile assistance terminal 300 acquires mobile body peripheral information, and the mobile assistance apparatus 100 updates the map information.

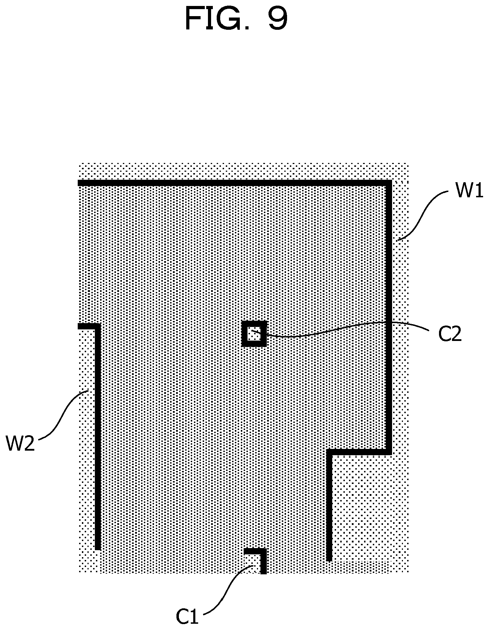

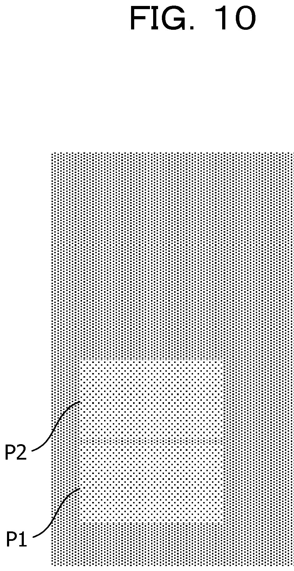

First, when the vehicle 200 travels as indicated by the arrow R2 in FIG. 8, the imaging targets of which images are captured by the four distance-measuring cameras are detected like contours indicated by bold lines in FIG. 9. A part of the vehicle B, a part of the column C1, and a part of the wall W2 are not detected since they are out of the image capturing ranges of the four distance-measuring cameras. In addition, performing image processing to extract the shape of the white line from the images captured by the distance-measuring cameras enables detection of the parking spaces P1 and P2 as illustrated in FIG. 10.

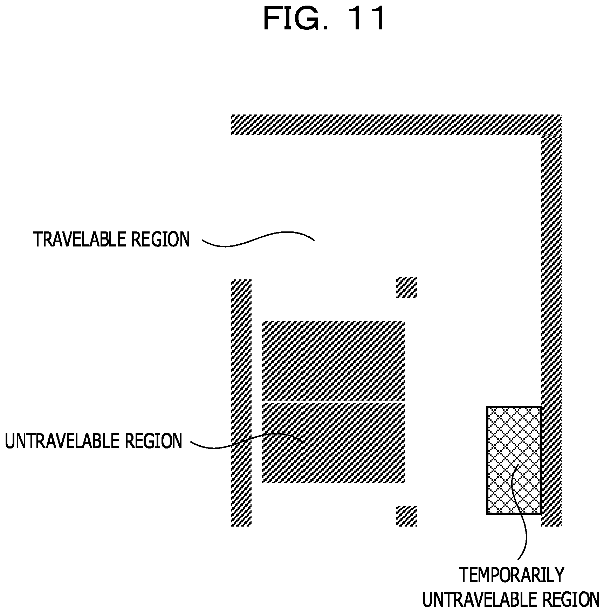

Next, based on the information obtained in the description of FIGS. 8 to 10, as in the description of FIGS. 5 to 7, the respective grids are classified into the three regions, that is, the "travelable region", the "temporarily untravelable region", and the "untravelable region. A map illustrated in FIG. 11 is thus obtained by updating the map (FIG. 7) in an initial state. The position to which the vehicle B has moved is updated as a temporarily untravelable region.

As described above, the mobile assistance system 10 detects a parked vehicle and the like, and outputs an optimal route in such a manner that a large number of vehicles equipped with mobile assistance terminals incessantly acquire mobile body peripheral information while traveling and the mobile assistance apparatus 100 updates map information, based on latest mobile body peripheral information.

The classification of a grid that is set at a travelable region in the initial state and then is updated to a temporarily untravelable region based on detection of a parked vehicle may be updated to the temporarily untravelable region and, after a lapse of a predetermined time, may be updated to the travelable region in the map information, on the assumption that the parked vehicle will move after the lapse of the predetermined time.

In the following description, the mobile assistance terminals 300a, 300b, and 300c respectively mounted on the vehicles 200a, 200b, and 200c are similar in functional configuration and hardware configuration to one another, and therefore are collectively described as the "mobile assistance terminal 300". In addition, the vehicles 200a, 200b, and 200c are also similar to one another, and therefore are collectively described as the "vehicle 200".

From the viewpoint of increasing the amount of acquirable mobile body peripheral information and increasing the frequency of updating the map information, preferably, the number of vehicles 200 equipped with the mobile assistance terminals 300 is larger. More preferably, all vehicles traveling roads are equipped with the mobile assistance terminals 300. The number of mobile assistance apparatuses 100 may be two or more.

### <Mobile Assistance Apparatus>

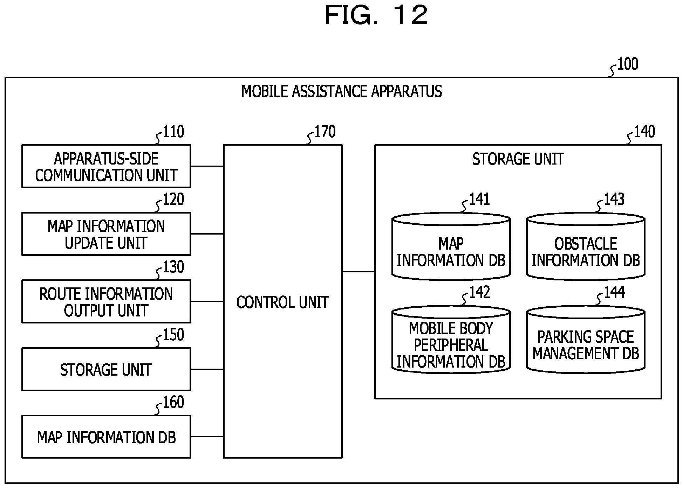

FIG. 12 is an explanatory view illustrating an exemplary functional configuration of the mobile assistance apparatus 100.

As illustrated in FIG. 12, the mobile assistance apparatus 100 includes an apparatus-side communication unit 110, a map information update unit 120, a route information output unit 130, a storage unit 140, an input unit 150, an output unit 160, and a control unit 170.

The apparatus-side communication unit 110 receives mobile body peripheral information from a terminal-side communication unit 340 of the mobile assistance terminal 300. The apparatus-side communication unit 110 transmits route information output from the route information output unit 130, to the terminal-side communication unit 340 of the mobile assistance terminal 300.

The apparatus-side communication unit 110 accepts various requests from the mobile assistance terminal 300.

### <<Map Information Update Unit>>

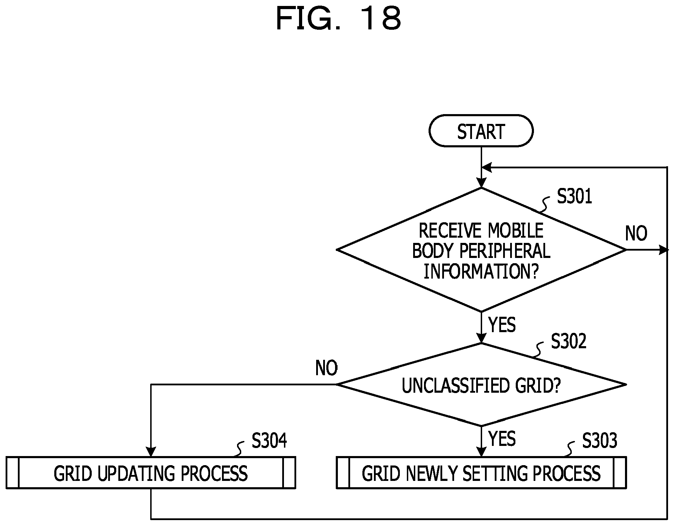

When the apparatus-side communication unit 110 receives mobile body peripheral information from the mobile assistance terminal 300 (see FIG. 18: S301), the map information update unit 120 determines whether there is an unclassified grid among grids in a range classifiable based on the received mobile body peripheral information (see FIG. 18: S302).

Next, the map information update unit 120 performs a grid newly setting process on an unclassified grid (see FIG. 18: S303), and performs a grid updating process on a classified grid (see FIG. 18: S304).

### -Grid Newly Setting Process-

In the grid newly setting process, the map information update unit 120 functions as a map creation unit. The mobile assistance apparatus functions as a map creation apparatus, the mobile assistance terminal functions as an information acquisition terminal, and the mobile assistance system functions as a map creation system.

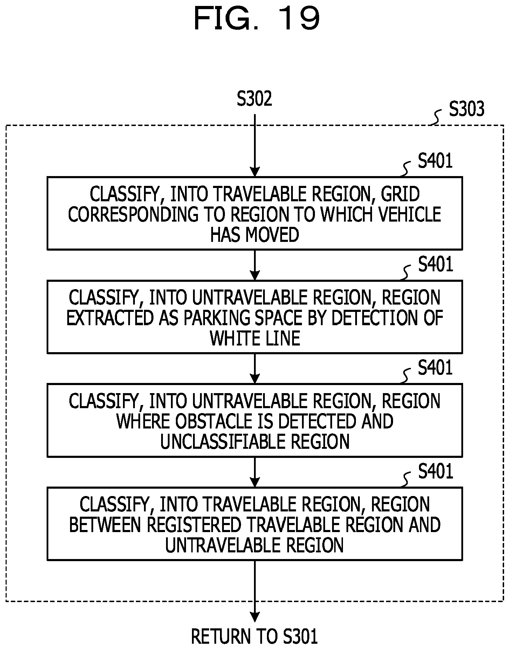

The map information update unit 120 classifies a grid corresponding to a region to which the vehicle 200 has moved into a "travelable region", based on position information on the vehicle 200 included in mobile body peripheral information (see FIG. 19: S401). The map information update unit 120 also classifies a grid corresponding to a region extracted as a parking space by detecting a white line into an "untravelable region", based on an image of an imaging target around the periphery of the vehicle 200 (see FIG. 19: S402). The map information update unit 120 also classifies a grid corresponding to a region where an obstacle has been detected and a grid corresponding to a region that is unclassifiable based on the acquired mobile body peripheral information into an "untravelable region" (see FIG. 19: S403). The map information update unit 120 then sets the grids in map information stored in a map information DB 141.

The map information update unit 120 classifies into a "travelable region" a grid between the grid classified into and set at the "travelable region" as to the region to which the vehicle 200 has moved and the grid classified into and set at the "untravelable region", and then sets the grid in the map information stored in the map information DB 141 (see FIG. 19: S404).

By performing the grid newly setting process described above, even in a state in which no map information is stored in the map information DB, the mobile assistance system acquires mobile body peripheral information including a peripheral image of a mobile body, distance information on a distance from the mobile body to an imaging target around the periphery of the mobile body, and position information on the mobile body, thereby constructing map information indicating grids each classified into a "travelable region" or an "untravelable region", based on the mobile body peripheral information, and newly creating a map indicating a region where the mobile body is travelable.

The use of a map creation-specific measurement vehicle considerably increases cost for creating a map. Therefore it is not realistic to create a map covering parking lots and the like on private roads. However, the combination of inexpensive distance-measuring cameras with a GPS unit enables acquisition of information for creating a map with relative ease. It is therefore possible to create a map indicating a region where a vehicle is travelable at low cost even on a private road such as a parking lot.

### -Grid Updating Process-

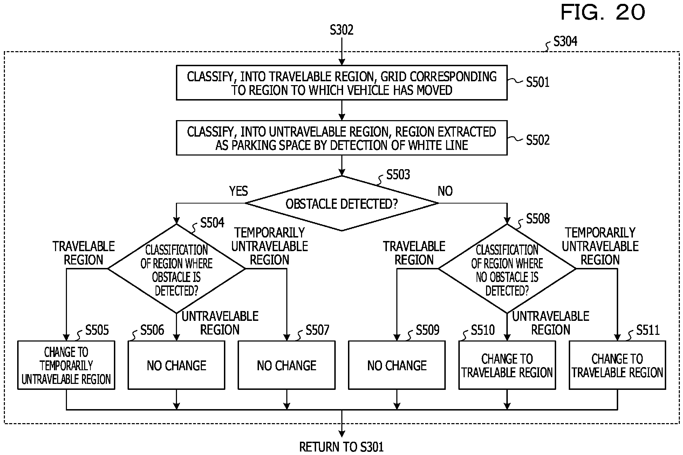

The map information update unit 120 classifies a grid corresponding to a region where the vehicle 200 moved in the past into a "travelable region", based on position information on the vehicle 200 included in mobile body peripheral information (see FIG. 20: S501). The map information update unit 120 also classifies a grid corresponding to a region extracted as a parking space by detecting a white line into an "untravelable region", based on an image of an imaging target around the periphery of the vehicle 200 (see FIG. 20: S502). The map information update unit 120 then sets the grids in the map information stored in the map information DB 141.

Next, the map information update unit 120 determines whether an obstacle is detected, based on the mobile body peripheral information (see FIG. 20: S503). The map information update unit 120, which has determined that an obstacle is detected, refers to the set map information to make a determination as to classification of a grid corresponding to a region where the obstacle is detected (FIG. 20: S504). When the map information update unit 120 determines that the grid is classified into a "travelable region", the map information update unit 120 changes the classification of the grid from the "travelable region" to a "temporarily untravelable region" (FIG. 20: S505). When the map information update unit 120 determines that the grid is classified into an "untravelable region" or a "temporarily untravelable region", the map information update unit 120 does not change the classification of the grid (FIG. 20: S506, S507). On the other hand, the map information update unit 120, which has determined that no obstacle is detected, refers to the set map information to make a determination as to classification of a grid corresponding to a region where no obstacle is detected (FIG. 20: S508). When the map information update unit 120 determines that the grid is classified into a "travelable region", the map information update unit 120 does not change the classification of the grid (FIG. 20: S509). When the map information update unit 120 determines that the grid is classified into an "untravelable region" or a "temporarily untravelable region", the map information update unit 120 changes the classification of the grid from the "untravelable region" or the "temporarily untravelable region" to a "travelable region" (FIG. 20: S510, S511).

As described above, the mobile assistance system 10 detects a parked vehicle and the like, and outputs an optimal route in such a manner that a large number of vehicles equipped with mobile assistance terminals incessantly acquire mobile body peripheral information while traveling and the mobile assistance apparatus 100 updates map information, based on latest mobile body peripheral information.

Upon detection of a parking space, a wall, a column, or the like in the grid newly setting process or the grid updating process, a predetermined range near the parking space, the wall, the column, or the like may be identified as a pedestrian passageway, and a grid corresponding to the region may be set at an "untravelable region".

### <<Route Information Output Unit>>

The route information output unit 130 receives a request from the mobile assistance terminal 300, and outputs route information, based on map information that is newly created by or is updated by the map information update unit 120.

In this embodiment, the mobile assistance apparatus includes the route information output unit. However, this embodiment is not limited to this configuration. For example, the mobile assistance terminal may include the route information output unit. In this case, when the mobile assistance terminal outputs route information, the mobile assistance apparatus transmits latest map information to the mobile assistance terminal.

The storage unit 140 includes the map information DB 141, a mobile body peripheral information DB 142, an obstacle information DB 143, and a parking space information DB 144.

The map information DB 141 in this embodiment stores therein, as map information, information on items including "grid identification information, grid position information, classification information, an update date and time, and terminal identification information" that are correlated with one another.

In this embodiment, the "grid identification information" is a code to be used for identifying a 30 cm-square grid divided on a map capable of locating a position by latitude and longitude.

The "grid position information" is position information on latitude and longitude for locating a position of a grid.

The "classification information" is information on classification of a grid that is newly set and updated based on mobile body peripheral information, and is set at any of the classifications including the "travelable region", the "temporarily untravelable region", and the "untravelable region".

The "update date and time" is information on a date and time at which the classification information is updated.

The "terminal identification information" is a code to be used for identifying a terminal that receives mobile body peripheral information as original data in which classification information is updated.

In the foregoing exemplary description, this embodiment employs five types of information; however, this embodiment is not limited to this configuration.

The mobile body peripheral information DB 142 stores therein mobile body peripheral information transmitted from the mobile assistance terminal. The mobile body peripheral information DB 142 in this embodiment stores therein, as mobile body peripheral information, information on items including "an acquisition date and time, image and measured distance information identification information, mobile body position information, and terminal identification information" that are correlated with one another.

The "acquisition date and time" is information on a date and time at which mobile body peripheral information is acquired.

The "image and measured distance information identification information" is a code to be used for identifying an image and measured distance information acquired by a distance-measuring camera. The image and the measured distance information are correlated with the image and measured distance information identification information, and are stored in the storage unit 140 independently of each other.

The "mobile body position information" is position information on the latitude and longitude of a mobile body, the position information being acquired by a GPS unit synchronized with a distance-measuring camera.

The "terminal identification information" is a code to be used for identifying a terminal that acquires mobile body peripheral information.

In the foregoing exemplary description, this embodiment employs four types of information; however, this embodiment is not limited to this configuration.

The obstacle information DB 143 stores therein obstacle information obtained by the mobile assistance apparatus 100 based on mobile body peripheral information.

The obstacle information DB 143 in this embodiment stores therein, as obstacle information, items including "obstacle position information, an update date and time, and a registration date and time" that are correlated with one another.

The "obstacle position information" is information on a position at which an obstacle is present (a range of a grid).

The "update date and time" is information on a date and time at which the obstacle information is updated.

The "registration date and time" is information on a date and time at which the obstacle information is registered.

In the foregoing exemplary description, this embodiment employs three types of information; however, this embodiment is not limited to this configuration.

The parking space information DB 144 stores therein parking space information obtained by the mobile assistance apparatus 100 based on mobile body peripheral information.

The parking space information DB 144 in this embodiment stores therein, as parking space information, items including "parking space identification information, parking space position information, status information, a status update date and time, and a parking space registration date and time" that are correlated with one another.

The "parking space identification information" is a code to be used for identifying a parking space.

The "parking space position information" is information on a position at which a parking space is present (a position and range of a grid).

The "status information" is information indicating a status of a parking space, and is set at any of "vacant", "in guidance", and "in use".

The "parking space registration date and time" is information on a date and time at which a parking space is registered.

In the foregoing exemplary description, this embodiment employs four types of information; however, this embodiment is not limited to this configuration.

The storage unit 140 stores therein, based on an instruction from the control unit 170, various programs installed in the mobile assistance apparatus 100, data to be generated by execution of the programs, and the like.

The control unit 170 executes the various programs stored in the storage unit 140 to control the entire mobile assistance apparatus 100.

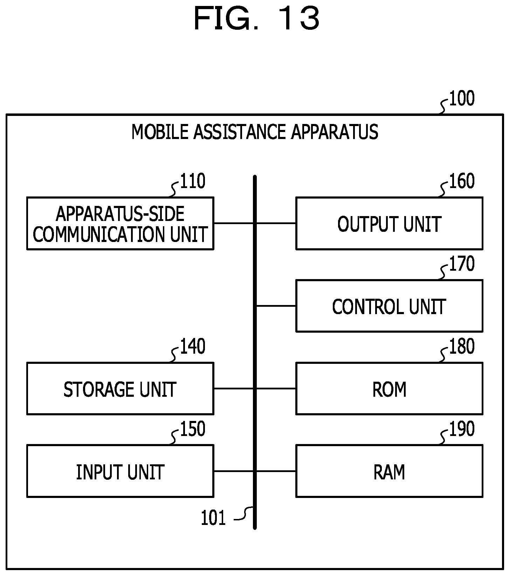

FIG. 13 is an explanatory view illustrating an exemplary hardware configuration of the mobile assistance apparatus 100.

As illustrated in FIG. 13, the mobile assistance apparatus 100 includes an apparatus-side communication unit 110, a storage unit 140, an input unit 150, an output unit 160, a control unit 170, a read only memory (ROM) 180, and a random access memory (RAM) 190. The respective units of the mobile assistance apparatus 100 are communicably connected to one another via a bus 101.

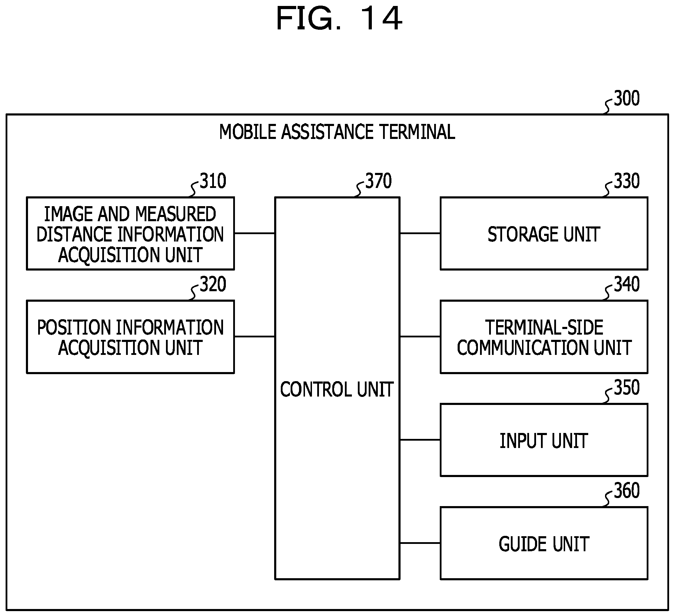

The apparatus-side communication unit 110 is not particularly limited as long as it is communicably connected to the terminal-side communication unit 340 of the mobile assistance terminal 300 illustrated in FIG. 14, and any known unit may be appropriately used as the apparatus-side communication unit 110.

The storage unit 140 is not particularly limited as long as various types of information are storable therein, and may be appropriately selected in accordance with its purpose. Examples of the storage unit 140 may include, in addition to a solid state drive, a hard disc drive, and the like, portable storage devices such as a compact disc (CD) drive, a digital versatile disc (DVD) drive, a Blu-ray (registered trademark) disc) (BD) drive, and the like, and a part of a cloud that is a group of computers on a network.

The input unit 150 is not particularly limited as long as it is capable of accepting various requests to the mobile assistance apparatus 100, and any known unit may be appropriately used as the input unit 150. Examples of the input unit 150 may include a keyboard, a mouse, a touch panel, a microphone, and the like.

The output unit 160 is not particularly limited, and any known unit may be appropriately used as the output unit 160. Examples of the output unit 160 may include a display, a loudspeaker, and the like.

Examples of the control unit 170 may include a central processing unit (CPU) and the like. A processor that executes software has a hardware configuration.

The ROM 180 stores therein various programs, data, and the like that cause the control unit 170 to execute the various programs stored in the storage unit 140. For example, the ROM 180 stores therein boot programs and the like such as a basic input/output system (BIOS), an extensible firmware interface (EFI), and the like.

The RAM 190 is a main storage device, and functions as a working area to be expanded when the various programs stored in the storage unit 140 are executed by the control unit 170. Examples of the RAM 190 may include a dynamic random access memory (DRAM), a static random access memory (SRAM), and the like.

### <Mobile Assistance Terminal>

FIG. 14 is an explanatory view illustrating an exemplary functional configuration of the mobile assistance terminal 300.

As illustrated in FIG. 14, the mobile assistance terminal 300 includes an image and measured distance information acquisition unit 310, a position information acquisition unit 320, a storage unit 330, the terminal-side communication unit 340, an input unit 350, and a guide unit 360.

The image and measured distance information acquisition unit 310 acquires an image of an imaging target around the periphery of the vehicle 200 and distance information on a distance from the vehicle 200 to the imaging target, using the four distance-measuring cameras mounted to the vehicle 200 to capture a frontward image, rearward image, leftward image, and rightward image of the vehicle 200.

The position information acquisition unit 320 acquires position information on the latitude and longitude of the vehicle 200, using a GPS unit 320, while being synchronized with the image and measured distance information acquisition unit 310.

The storage unit 330 stores therein, based on an instruction from a control unit 370, an image of an imaging target around the periphery of the vehicle 200 and distance information on a distance from the vehicle 200 to the imaging target, which are acquired by the image and measured distance information acquisition unit 310 and the position information acquisition unit 320, and position information on the latitude and longitude of the vehicle 200 with the image, the distance information, and the position information correlated with one another.

The storage unit 330 also stores therein, based on an instruction from the control unit 370, various programs installed in the mobile assistance terminal 300, data to be generated by execution of the programs, and the like.

The terminal-side communication unit 340 reads each piece of information from the storage unit 330, and transmits the read information to the mobile assistance apparatus 100 via the network 400, based on an instruction from the control unit 370. The terminal-side communication unit 340 receives route information from the mobile assistance apparatus 100 via the network 400, based on an instruction from the control unit 370.

The input unit 350 causes a driver to input driver identification information when the driver gets into the vehicle.

The input unit 350 accepts various requests to the mobile assistance terminal 300 from the driver, based on an instruction from the control unit 370.

The guide unit 360 guides on display or by voice the vehicle 200 to a route from a departure to a destination, which is desired by an occupant of the vehicle 200, based on route information received from the mobile assistance apparatus 100. The guide unit 360 displays thereon an internal state of the mobile assistance terminal 300, based on an instruction from the control unit 370.

The guidance may be made to achieve autonomous operation of an autonomous car based on route information.

The control unit 370 executes the various programs stored in the storage unit 330 to control the entire mobile assistance terminal 300.

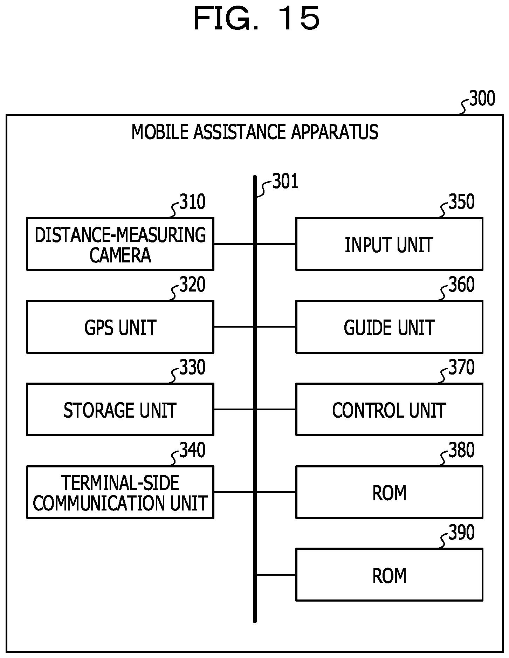

FIG. 15 is an explanatory view illustrating an exemplary hardware configuration of the mobile assistance terminal 300.

As illustrated in FIG. 15, the mobile assistance terminal 300 includes a distance-measuring camera 310, a GPS unit 320, a storage unit 330, a terminal-side communication unit 340, an input unit 350, a guide unit 360, the control unit 370, a ROM 380, and a RAM 390. The respective units of the mobile assistance terminal 300 are communicably connected to one another via a bus 301.

The distance-measuring camera 310 is not particularly limited as long as it is capable of acquiring an image of a periphery of a vehicle and is also capable of acquiring distance information on a distance from the vehicle 200 equipped with the distance-measuring camera 310 to an imaging target, and a commercially available product may be used as the distance-measuring camera 310. Examples of the commercially available product may include a monocular camera manufactured by Mobileye, and the like.

The GPS unit 320 acquires position information on the latitude and longitude of the vehicle 200.

In this embodiment, the GPS unit 320 is used for acquiring the position information on the latitude and longitude of the vehicle. However, this embodiment is not limited to this configuration. For example, the Quasi-Zenith Satellite System (QZSS) or the like may be used in addition to a GPS.

The storage unit 330 is not particularly limited as long as various types of information are storable therein, and may be appropriately selected in accordance with its purpose. Examples of the storage unit 330 may include, in addition to a solid state drive, a hard disc drive, and the like, portable storage devices such as a CD drive, a DVD drive, a BD drive, and the like, and a part of a cloud that is a group of computers on a network.

The terminal-side communication unit 340 is not particularly limited as long as it is communicably connected to the apparatus-side communication unit 110 of the mobile assistance apparatus 100 illustrated in FIG. 12, and any known unit may be appropriately used as the terminal-side communication unit 340. Examples of the terminal-side communication unit 340 may include a transceiver for utilizing telematics, and the like.

The input unit 350 is not particularly limited as long as it is capable of accepting various requests to the mobile assistance terminal 300 from the driver, and any known unit may be appropriately used as the input unit 350. Examples of the input unit 350 may include a touch panel, a microphone, and the like.

The guide unit 360 is not particularly limited as long as it is capable of guiding the vehicle 200 to a route from a departure to a destination, which is desired by the occupant of the vehicle 200, based on route information, and any known unit may be appropriately used as the guide unit 360. Examples of the guide unit 360 may include a display, a loudspeaker, and the like.

Examples of the control unit 370 may include a CPU and the like.

The ROM 380 stores therein various programs, data, and the like that cause the control unit 370 to execute the various programs stored in the storage unit 330. For example, the ROM 380 stores therein boot programs and the like such as a BIOS, an EFI, and the like.

The RAM 390 is a main storage device, and functions as a working area to be expanded when the various programs stored in the storage unit 330 are executed by the control unit 370. Examples of the RAM 390 may include a DRAM, an SRAM, and the like.

Next, a description will be given of a flow of each process to be performed by the mobile assistance system 10 in this embodiment.

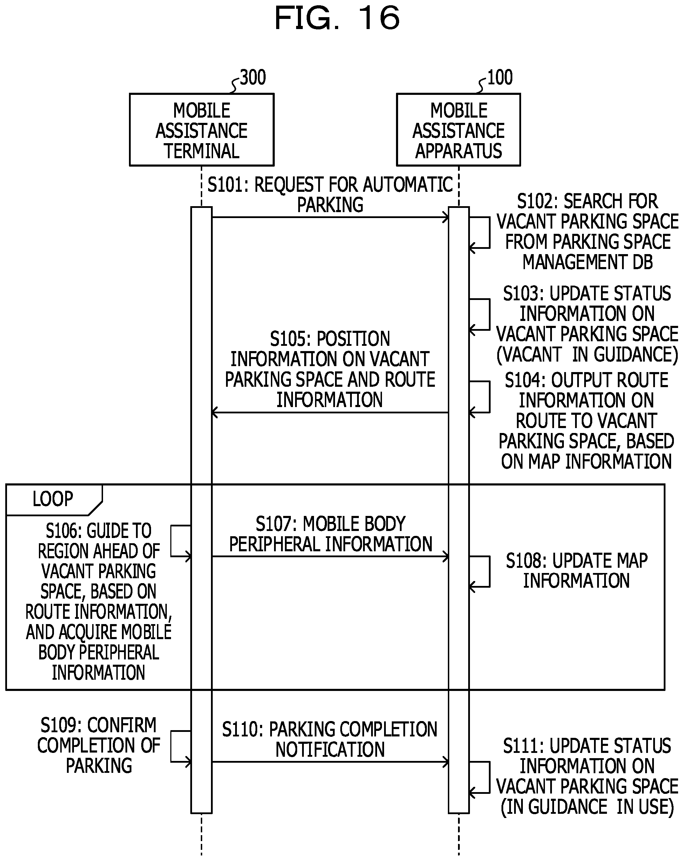

FIG. 16 is a sequence diagram illustrating a flow in which the mobile assistance terminal 300 acquires mobile body peripheral information during automatic operation based on map information, and the mobile assistance apparatus 100 updates the map information. With reference to FIGS. 1, 12, and 14, hereinafter, a description will be given of a control flow in which the mobile assistance terminal 300 acquires mobile body peripheral information while performing a process of achieving automatic parking by referring to map information to guide an autonomous car to a vacant parking space, and the mobile assistance apparatus 100 updates the map information, in accordance with the sequence diagram of FIG. 16.

In step S101, the mobile assistance terminal 300 outputs a request for automatic parking to the mobile assistance apparatus 100, and then causes the process to proceed to step S102.

In step S102, the mobile assistance apparatus 100, which has received the request for automatic parking, searches for a parking space from a parking space management DB 124, and then causes the process to proceed to step S103.

In step S103, the mobile assistance apparatus 100, which has searched for the vacant parking space, updates status information (vacant → in guidance) on the vacant parking space, and then causes the process to proceed to step S104.

In step S104, the mobile assistance apparatus 100, which has updated the status information on the vacant parking space, outputs route information on a route to the vacant parking space, based on the map information, and then causes the process to proceed to step S105.

In step S105, the mobile assistance apparatus 100, which has output the route information on the route to the vacant parking space, transmits position information on the vacant parking space and the route information to the mobile assistance terminal 300, and then causes the process to proceed to step S106.

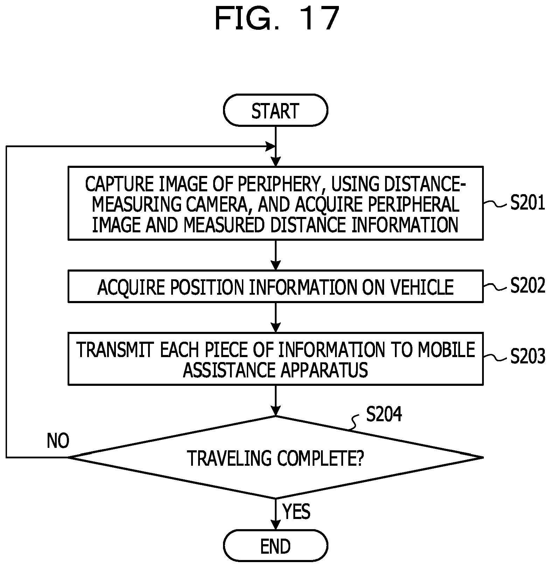

In steps S106 to S108, the mobile assistance terminal 300, which has received the position information on the vacant parking space and the route information, guides the vehicle 200 to a region ahead of the vacant parking space, based on the route information (S106). The mobile assistance terminal 300 transmits mobile body peripheral information acquired by the distance-measuring camera 310 and the GPS unit 320 to the mobile assistance apparatus 100 while the vehicle 200 travels the region ahead of the vacant parking space (S107). The mobile assistance apparatus 100 updates the map information, based on the obstacle information and the parking space information, and then causes the process to proceed to step S109. The details of the process of newly setting or updating the classification of a grid in the map information will be described later with reference to FIGS. 17 to 20.

In step S109, the mobile assistance terminal 300, which has guided the autonomous car to the region ahead of the vacant parking space, autonomously parks the autonomous car in the parking space, and confirms the completion of parking. The mobile assistance terminal 300 then causes the process to proceed to step S110.

In step S110, the mobile assistance terminal 300, which has confirmed the completion of parking, transmits a parking completion notification to the mobile assistance apparatus 100, and then causes the process to proceed to step S111.

In step S111, the mobile assistance apparatus 100, which has received the parking completion notification, updates the status information (in guidance → in use) on the vacant parking space in the parking space management DB 124, and then ends the process.

FIG. 17 is a flowchart illustrating an exemplary flow in which the mobile assistance terminal 300 acquires mobile body peripheral information, and then transmits the mobile body peripheral information to the mobile assistance apparatus 100.

With reference to FIG. 14, hereinafter, a description will be given of a flow (corresponding to steps S106 to S108 in FIG. 16) in which the mobile assistance terminal 300 acquires the mobile body peripheral information, and then transmits the mobile body peripheral information to the mobile assistance apparatus 100, in accordance with the flowchart of FIG. 17.

In step S201, the image and measured distance information acquisition unit 310 causes the distance-measuring cameras to capture images of the periphery of the autonomous car, and acquires the images of the periphery of the vehicle 200 and distance information on a distance from the vehicle 200 to a target of which images are captured, while the vehicle 200 travels the region ahead of the vacant parking space. The image and measured distance information acquisition unit 310 then causes the process to proceed to step S202.

In step S202, the position information acquisition unit 320 acquires the position information on the vehicle 200 in synchronization with the image and measured distance information acquisition unit 310, and then causes the process to proceed to step S203.

In step S203, the control unit 370 transmits mobile body peripheral information including the images of the periphery of the vehicle 200, the distance information on the distance from the vehicle 200 to the target of which the images are captured, and the position information on the vehicle 200 to the mobile assistance apparatus 100, and then causes the process to proceed to step S204.

In step S204, the control unit 370 determines whether the vehicle 200 completes its traveling. When the control unit 370 determines that the vehicle 200 does not complete its traveling yet, the control unit 370 causes the process to return to step S201. When the control unit 370 determines that the vehicle 200 completes its traveling, the control unit 370 ends the process.

FIG. 18 is a flowchart illustrating an exemplary flow in which the mobile assistance apparatus 100 updates the map information, based on the received mobile body peripheral information.

With reference to FIG. 12, hereinafter, a description will be given of a flow (corresponding to steps S106 to S108 in FIG. 16) in which the mobile assistance apparatus 100 updates the map information, based on the mobile body peripheral information, in accordance with the flowchart of FIG. 18.

In step S301, when the apparatus-side communication unit 110 receives the mobile body peripheral information from the mobile assistance terminal 300, the map information update unit 120 causes the process to proceed to step S302.

In step S302, the map information update unit 120 determines whether there is an unclassified grid among grids in a range classifiable based on the received mobile body peripheral information. When the map information update unit 120 determines that there is an unclassified grid, the map information update unit 120 causes the process to proceed to step S303. When the map information update unit 120 determines that there is no unclassified grid, the map information update unit 120 causes the process to proceed to step S304.

In step S303, when the map information update unit 120 performs the grid newly setting process on an unclassified grid, the map information update unit 120 causes the process to return to step S301. The details of the grid newly setting process will be described later with reference to a flowchart of FIG. 19.

In step S304, when the map information update unit 120 performs the grid updating process on a classified grid, the map information update unit 120 causes the process to return to step S301. The details of the grid updating process will be described later with reference to a flowchart of FIG. 20.

FIG. 19 is a flowchart illustrating an exemplary flow of the grid newly setting process.

With reference to FIGS. 1 and 12, hereinafter, a description will be given of the flow of the grid newly setting process in step S303 illustrated in FIG. 18, in accordance with the flowchart of FIG. 19.

In step S401, the map information update unit 120 classifies and sets a grid corresponding to a region to which the vehicle 200 has moved into and at a "travelable region", based on the position information on the vehicle 200 included in the mobile body peripheral information, and then causes the process to proceed to step S402.

In step S402, the map information update unit 120 classifies and sets a grid corresponding to a region extracted as a parking space by detecting a white line into and at an "untravelable region", based on the images of the imaging target around the periphery of the vehicle 200, and then causes the process to proceed to step S403.

In step S403, the map information update unit 120 classifies and sets a grid corresponding to a region where an obstacle is detected and a grid corresponding to a region unclassifiable based on the acquired mobile body peripheral information into and at an "untravelable region", and then causes the process to proceed to step S404.

In step S404, the map information update unit 120 classifies and sets a grid between the grid classified into the "travelable region" as to the region to which the vehicle 200 has moved and the grid classified into the "untravelable region" into and at a "travelable region", and then ends the process.

FIG. 20 is a flowchart illustrating an exemplary flow of the grid updating process.

With reference to FIGS. 1 and 12, hereinafter, a description will be given of the flow of the grid updating process in step S304 illustrated in FIG. 18, in accordance with the flowchart of FIG. 20.

In step S501, as in step S401, the map information update unit 120 classifies and sets a grid corresponding to a region to which the vehicle 200 has moved into and at a "travelable region", based on the position information on the vehicle 200 included in the mobile body peripheral information, and then causes the process to proceed to step S502.

In step S502, as in step S402, the map information update unit 120 classifies and sets a grid corresponding to a region extracted as a parking space by detecting a white line into and at an "untravelable region", based on the images of the imaging target around the periphery of the vehicle 200, and then causes the process to proceed to step S503.

In step S503, the map information update unit 120 determines whether an obstacle is detected, based on the mobile body peripheral information. When the map information update unit 120 determines that an obstacle is detected, the map information update unit 120 causes the process to proceed to step S504. When the map information update unit 120 determines that no obstacle is detected, the map information update unit 120 causes the process to proceed to step S508.

In steps S504 to S507, the map information update unit 120 refers to the set map information to make a determination as to classification of a grid corresponding to a region where the obstacle is detected (S504). When the map information update unit 120 determines that the grid is classified into a "travelable region", the map information update unit 120 changes the classification of the grid from the "travelable region" to a "temporarily untravelable region" (S505). When the map information update unit 120 determines that the grid is classified into an "untravelable region" or a "temporarily untravelable region", the map information update unit 120 does not change the classification of the grid (S506, S507). The map information update unit 120 then ends the process.

In steps S508 to S511, the map information update unit 120 refers to the set map information to make a determination as to classification of a grid corresponding to a region where no obstacle is detected (S508). When the map information update unit 120 determines that the grid is classified into a "travelable region", the map information update unit 120 does not change the classification of the grid (S509). When the map information update unit 120 determines that the grid is classified into an "untravelable region" or a "temporarily untravelable region", the map information update unit 120 changes the classification of the grid from the "untravelable region" or the "temporarily untravelable region" to a "travelable region" (S510, S511). The map information update unit 120 then ends the process.

In this embodiment, an autonomous car has been described as a mobile body. However, this embodiment is not limited thereto. Examples of the mobile body may include a robot, a drone, and the like.

The aspect of this embodiment is not limited to that described above, and may be modified as follows: the storage unit of the mobile assistance apparatus is configured to store initial map information; the mobile assistance terminal is configured to have the remaining functions of the mobile assistance apparatus; the mobile assistance terminal is configured to store map information to be updated based on mobile body peripheral information; and the mobile assistance terminal is configured to output route information.

The following notes will be additionally disclosed as to the foregoing embodiment.

### (Note 1)

A mobile assistance system including:
a mobile assistance terminal to be mounted on a mobile body,
the mobile assistance terminal being configured to acquire mobile body peripheral information as information on a periphery of the mobile body; and
a mobile assistance apparatus configured to update map information, based on the mobile body peripheral information transmitted from the mobile assistance terminal,
wherein
the mobile assistance terminal includes:
   an image and measured distance information acquisition unit configured to acquire an image of an imaging target around the periphery of the mobile body and distance information on a distance from the mobile body to the imaging target;
   a position information acquisition unit configured to acquire position information on the mobile body in synchronization with the image and measured distance information acquisition unit; and
   a terminal-side communication unit configured to transmit to the mobile assistance apparatus the mobile body peripheral information including the image of the imaging target, the distance information on the distance from the mobile body to the imaging target, and the position information on the mobile body, and
the mobile assistance apparatus includes:
   a storage unit configured to store the past mobile body peripheral information received from the mobile assistance terminal; and
   a map information update unit configured to update map information indicating a travelable region where the mobile body is travelable, based on the past mobile body peripheral information stored in the storage unit and the mobile body peripheral information received from the mobile assistance terminal.

### (Note 2)

The mobile assistance system according to note 1, wherein
on condition that the map information update unit detects an obstacle in the travelable region, the map information update unit updates the map information to define as a temporarily untravelable region a range where the obstacle is detected in the travelable region.

### (Note 3)

The mobile assistance system according to any of notes 1 and 2, wherein
the map information update unit updates the map information to change the travelable region to a temporarily untravelable region and, after a lapse of a predetermined time, updates the map information to change the temporarily untravelable region to the travelable region.

### (Note 4)

The mobile assistance system according to any of notes 1 to 3, wherein the mobile body includes a vehicle, and
on condition that the map information update unit detects a parking space, the map information update unit updates the map information to define a range of the parking space as an untravelable region.

### (Note 5)

The mobile assistance system according to note 4, wherein
the map information update unit identifies a predetermined range near the parking space as a pedestrian passageway, and updates the map information to define the predetermined range as an untravelable region.

### (Note 6)

The mobile assistance system according to any of notes 1 to 5, wherein
on condition that the map information update unit detects a wall and a column, the map information update unit identifies a predetermined range near the wall and the column as a pedestrian passageway, and updates the map information to define the predetermined range as an untravelable region.

### (Note 7)

The mobile assistance system according to any of notes 1 to 6, wherein
the mobile assistance apparatus further includes:
a route information output unit configured to output route information, based on the map information updated by the map information update unit; and
an apparatus-side communication unit configured to transmit the route information to the mobile assistance terminal, and
the mobile assistance terminal further includes a guide unit configured to guide the mobile body, based on the received route information.

### (Note 8)

A mobile assistance apparatus for updating map information, based on mobile body peripheral information as information on a periphery of a mobile body, the mobile body peripheral information being transmitted from a mobile assistance terminal configured to acquire the mobile body peripheral information,
the mobile assistance apparatus including:
an apparatus-side communication unit configured to receive from the mobile assistance terminal the mobile body peripheral information including an image of an imaging target around the periphery of the mobile body, distance information on a distance from the mobile body to the imaging target, and position information on the mobile body;
a storage unit configured to store the past mobile body peripheral information received from the mobile assistance terminal; and
a map information update unit configured to update map information indicating a travelable region where the mobile body is travelable, based on the past mobile body peripheral information stored in the storage unit and the mobile body peripheral information received from the mobile assistance terminal.

### (Note 9)

A mobile assistance terminal to be mounted on a mobile body, for transmitting mobile body peripheral information as information on a periphery of the mobile body to a mobile assistance apparatus and receiving route information from the mobile assistance apparatus,
the mobile assistance terminal including:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit;
a terminal-side communication unit configured to transmit, to the mobile assistance apparatus, mobile body peripheral information including the image of the imaging target, the distance information on the distance from the mobile body to the imaging target, and the position information on the mobile body,
the terminal-side communication unit being configured to update map information indicating a travelable region where the mobile body is travelable, based on the past mobile body peripheral information and the mobile body peripheral information transmitted from the mobile assistance apparatus,
the terminal-side communication unit being configured to receive the route information output based on the updated map information; and
a guide unit configured to guide the mobile body, based on the received route information.

### (Note 10)

A mobile assistance method for updating map information, based on mobile body peripheral information as information on a periphery of a mobile body, the mobile body peripheral information being transmitted from a mobile assistance terminal configured to acquire the mobile body peripheral information,
the mobile assistance method including:
receiving from the mobile assistance terminal the mobile body peripheral information including an image of an imaging target around the periphery of the mobile body, distance information on a distance from the mobile body to the imaging target, and position information on the mobile body;
storing the past mobile body peripheral information received from the mobile assistance terminal; and
updating map information indicating a travelable region where the mobile body is travelable, based on the past mobile body peripheral information stored in the storing step and the mobile body peripheral information received from the mobile assistance terminal.

### (Note 11)

A map creation system including:
an information acquisition terminal to be mounted on a mobile body,
the information acquisition terminal being configured to acquire mobile body peripheral information as information on a periphery of the mobile body; and
a map creation apparatus configured to create a map, based on the mobile body peripheral information transmitted from the information acquisition terminal,
wherein
the information acquisition terminal includes:
   an image and measured distance information acquisition unit configured to acquire an image of an imaging target around the periphery of the mobile body and distance information on a distance from the mobile body to the imaging target;
   a position information acquisition unit configured to acquire position information on the mobile body in synchronization with the image and measured distance information acquisition unit; and
   a terminal-side communication unit configured to transmit the mobile body peripheral information including the image of the imaging target, the distance information on the distance from the mobile body to the imaging target, and the position information on the mobile body, and
the map creation apparatus includes:
   a storage unit configured to store the mobile body peripheral information received from the information acquisition terminal; and
   a map creation unit configured to create a map indicating a travelable region where the mobile body is travelable, based on the mobile body peripheral information stored in the storage unit.

### (Note 12)

A map creation apparatus for creating a map, based on mobile body peripheral information as information on a periphery of a mobile body, the mobile body peripheral information being transmitted from an information acquisition terminal configured to acquire the mobile body peripheral information,
the map creation apparatus including:
an apparatus-side communication unit configured to receive from the information acquisition terminal the mobile body peripheral information including an image of an imaging target around the periphery of the mobile body, distance information on a distance from the mobile body to the imaging target, and position information on the mobile body;
a storage unit configured to store the mobile body peripheral information received from the information acquisition terminal; and
a map creation unit configured to create a map indicating a travelable region where the mobile body is travelable, based on the mobile body peripheral information stored in the storage unit.

### (Note 13)

An information acquisition terminal to be mounted on a mobile body, for transmitting mobile body peripheral information as information on a periphery of the mobile body to a map creation apparatus and receiving route information from the map creation apparatus,
the information acquisition terminal including:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit;
a terminal-side communication unit configured to transmit, to the map creation apparatus, mobile body peripheral information including the image of the imaging target, the distance information on the distance from the mobile body to the imaging target, and the position information on the mobile body,
the terminal-side communication unit being configured to update map information indicating a travelable region where the mobile body is travelable, based on the past mobile body peripheral information and the mobile body peripheral information transmitted from the map creation apparatus,
the terminal-side communication unit being configured to receive the route information output based on the updated map information; and
a guide unit configured to guide the mobile body, based on the received route information.

### REFERENCE SIGNS LIST

10: mobile assistance system (map creation system)
100: mobile assistance apparatus (map creation apparatus)
110: apparatus-side communication unit
120: map information update unit (map creation unit)
130: route information output unit
140: storage unit
200: vehicle
300: mobile assistance terminal (information acquisition terminal)
310: image and measured distance information acquisition unit (distance-measuring camera)
320: position information acquisition unit (GPS unit)
340: terminal-side communication unit
360: guide unit

## Claims

1. A mobile assistance system comprising:
a mobile assistance terminal to be mounted on a mobile body,
the mobile assistance terminal being configured to acquire mobile body peripheral information as information on a periphery of the mobile body; and
a mobile assistance apparatus configured to update map information, based on the mobile body peripheral information transmitted from the mobile assistance terminal,
wherein
the mobile assistance terminal includes:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit; and
a terminal-side communication unit configured to transmit to the mobile assistance apparatus the mobile body peripheral information including the image of the imaging target, the distance information on the distance from the mobile body to the imaging target, and the position information on the mobile body, and
the mobile assistance apparatus includes:
a storage unit configured to store the past mobile body peripheral information received from the mobile assistance terminal; and
a map information update unit configured to update map information indicating a travelable region where the mobile body is travelable, based on the past mobile body peripheral information stored in the storage unit and the mobile body peripheral information received from the mobile assistance terminal.

2. The mobile assistance system according to claim 1, wherein
on condition that the map information update unit detects an obstacle in the travelable region, the map information update unit updates the map information to define as a temporarily untravelable region a range where the obstacle is detected in the travelable region.

3. The mobile assistance system according to any of claims 1 and 2, wherein
the map information update unit updates the map information to change the travelable region to a temporarily untravelable region and, after a lapse of a predetermined time, updates the map information to change the temporarily untravelable region to the travelable region.

4. The mobile assistance system according to any of claims 1 to 3, wherein
the mobile body comprises a vehicle, and
on condition that the map information update unit detects a parking space, the map information update unit updates the map information to define a range of the parking space as an untravelable region.

5. The mobile assistance system according to claim 4, wherein
the map information update unit identifies a predetermined range near the parking space as a pedestrian passageway, and updates the map information to define the predetermined range as an untravelable region.

6. The mobile assistance system according to any of claims 1 to 5, wherein
on condition that the map information update unit detects a wall and a column, the map information update unit identifies a predetermined range near the wall and the column as a pedestrian passageway, and updates the map information to define the predetermined range as an untravelable region.

7. The mobile assistance system according to any of claims 1 to 6, wherein
the mobile assistance apparatus further includes:
a route information output unit configured to output route information, based on the map information updated by the map information update unit; and
an apparatus-side communication unit configured to transmit the route information to the mobile assistance terminal, and
the mobile assistance terminal further includes a guide unit configured to guide the mobile body, based on the received route information.

8. A mobile assistance apparatus for updating map information, based on mobile body peripheral information as information on a periphery of a mobile body, the mobile body peripheral information being transmitted from a mobile assistance terminal configured to acquire the mobile body peripheral information,
the mobile assistance apparatus comprising:
an apparatus-side communication unit configured to receive from the mobile assistance terminal the mobile body peripheral information including an image of an imaging target around the periphery of the mobile body, distance information on a distance from the mobile body to the imaging target, and position information on the mobile body;
a storage unit configured to store the past mobile body peripheral information received from the mobile assistance terminal; and
a map information update unit configured to update map information indicating a travelable region where the mobile body is travelable, based on the past mobile body peripheral information stored in the storage unit and the mobile body peripheral information received from the mobile assistance terminal.

9. A mobile assistance terminal to be mounted on a mobile body, for transmitting mobile body peripheral information as information on a periphery of the mobile body to a mobile assistance apparatus and receiving route information from the mobile assistance apparatus,
the mobile assistance terminal comprising:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit;
a terminal-side communication unit configured to transmit, to the mobile assistance apparatus, mobile body peripheral information including the image of the imaging target, the distance information on the distance from the mobile body to the imaging target, and the position information on the mobile body,
the terminal-side communication unit being configured to update map information indicating a travelable region where the mobile body is travelable, based on the past mobile body peripheral information and the mobile body peripheral information transmitted from the mobile assistance apparatus,
the terminal-side communication unit being configured to receive the route information output based on the updated map information; and
a guide unit configured to guide the mobile body, based on the received route information.

10. A mobile assistance method for updating map information, based on mobile body peripheral information as information on a periphery of a mobile body, the mobile body peripheral information being transmitted from a mobile assistance terminal configured to acquire the mobile body peripheral information,
the mobile assistance method comprising:
receiving from the mobile assistance terminal the mobile body peripheral information including an image of an imaging target around the periphery of the mobile body, distance information on a distance from the mobile body to the imaging target, and position information on the mobile body;
storing the past mobile body peripheral information received from the mobile assistance terminal; and
updating map information indicating a travelable region where the mobile body is travelable, based on the past mobile body peripheral information stored in the storing step and the mobile body peripheral information received from the mobile assistance terminal.

11. A map creation system comprising:
an information acquisition terminal to be mounted on a mobile body,
the information acquisition terminal being configured to acquire mobile body peripheral information as information on a periphery of the mobile body; and
a map creation apparatus configured to create a map, based on the mobile body peripheral information transmitted from the information acquisition terminal,
wherein
the information acquisition terminal includes:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit; and
a terminal-side communication unit configured to transmit the mobile body peripheral information including the image of the imaging target, the distance information on the distance from the mobile body to the imaging target, and the position information on the mobile body, and
the map creation apparatus includes:
a storage unit configured to store the mobile body peripheral information received from the information acquisition terminal; and
a map creation unit configured to create a map indicating a travelable region where the mobile body is travelable, based on the mobile body peripheral information stored in the storage unit.

12. A map creation apparatus for creating a map, based on mobile body peripheral information as information on a periphery of a mobile body, the mobile body peripheral information being transmitted from an information acquisition terminal configured to acquire the mobile body peripheral information,
the map creation apparatus comprising:
an apparatus-side communication unit configured to receive from the information acquisition terminal the mobile body peripheral information including an image of an imaging target around the periphery of the mobile body, distance information on a distance from the mobile body to the imaging target, and position information on the mobile body;
a storage unit configured to store the mobile body peripheral information received from the information acquisition terminal; and
a map creation unit configured to create a map indicating a travelable region where the mobile body is travelable, based on the mobile body peripheral information stored in the storage unit.

13. An information acquisition terminal to be mounted on a mobile body, for transmitting mobile body peripheral information as information on a periphery of the mobile body to a map creation apparatus and receiving route information from the map creation apparatus,
the information acquisition terminal comprising:
an image and measured distance information acquisition unit configured to acquire an image of an imaging target around the periphery of the mobile body and distance information on a distance from the mobile body to the imaging target;
a position information acquisition unit configured to acquire position information on the mobile body in synchronization with the image and measured distance information acquisition unit;
a terminal-side communication unit configured to transmit, to the map creation apparatus, mobile body peripheral information including the image of the imaging target, the distance information on the distance from the mobile body to the imaging target, and the position information on the mobile body,
the terminal-side communication unit being configured to update map information indicating a travelable region where the mobile body is travelable, based on the past mobile body peripheral information and the mobile body peripheral information transmitted from the map creation apparatus,
the terminal-side communication unit being configured to receive the route information output based on the updated map information; and
a guide unit configured to guide the mobile body, based on the received route information.
